# EUROPÄISCHE PATENTSCHRIFT

(11) **EP 2 825 600 B1**
(45) Veröffentlichungstag und Bekanntmachung des Hinweises auf die Patenterteilung: **02.03.2016**
(21) Anmeldenummer: 13707625.3
(22) Anmeldetag: 05.03.2013
(51) Int. Cl.: C09C 3/12, C09C 1/30, C07F 7/12, C07F 7/18

(54) **VERFAHREN ZUR OBERFLÄCHENMODIFIKATION VON PARTIKULÄREN FESTSTOFFEN**
PROCESS FOR SURFACE MODIFICATION OF PARTICULATE SOLIDS
PROCÉDÉ DE MODIFICATION DE LA SURFACE DE SOLIDES PARTICULAIRES

(30) Priorität: 12.03.2012 DE 102012203826
(43) Veröffentlichungstag der Anmeldung: 21.01.2015
(73) Patentinhaber: Wacker Chemie AG, 81737 München (DE)
(72) Erfinder: GOTTSCHALK-GAUDIG, Torsten, 84561 Mehring (DE); EHRKE, Carl-Heinz, 01561 Zabeltitz (DE); MAGINOT, Helmut, 84508 Burgkirchen (DE)
(74) Vertreter: Fritz, Helmut
(86) Internationale Anmeldenummer: PCT/EP2013/054320
(87) Internationale Veröffentlichungsnummer: WO 2013/135521

(56) Entgegenhaltungen:
- EP-A1- 1 302 444
- WO-A2-2007/084245
- DE-A1- 4 419 234
- GB-A- 887 257

## Beschreibung

Die Erfindung betrifft ein Verfahren zur Modifikation von feinteiligen partikulären Feststoffen mittels Gasphasensilylierung.

Oberflächenmodifizierte feinteilige partikuläre Feststoffe wie Kieselsäuren und insbesondere pyrogene Kieselsäuren werden u.a. eingesetzt zur Steuerung der Fließeigenschaften von Kleb-, Dicht- und Beschichtungsstoffen, zur Verbesserung der mechanischen Eigenschaften von Elastomeren, zur Steuerung der Ladungs- und Fließeigenschaften von Pulvern wie Tonern oder Pulverlacken.

Bevorzugt werden die feinteiligen partikulären Feststoffe chemisch irreversibel modifiziert. D.h. das Modifizierungsmittel ist chemisch an der Partikeloberfläche angebunden. Typische Modifizierungsmittel, die chemisch mit der Partikeloberfläche reagieren sind Organosilane oder Organosiloxane. Diese bilden mit der Füllstoffoberfläche stabile Feststoff-Silicium-Sauerstoffbindungen.

Verfahren zur Oberflächenmodifizierung von feinteiligen partikulären Feststoffen mit Organosilanen oder Organosiloxanen sind bekannt wie z.B. beschrieben in DE 10150274 oder EP 0686676. Den dort beschriebenen Verfahren ist gemein, dass in einem ersten Schritt die unmodifizierten feinteiligen partikulären Feststoffe intensiv mit dem Organosilan bzw. Organosiloxan vermischt werden, wobei diese entweder als Dampf oder als feinstverteiltes Aerosol dem Feststoff zugefügt werden. Anschließend werden Feststoff und Organosilan bzw. Organosiloxan thermisch zur Reaktion gebracht und dann gegebenenfalls anhaftende Abspaltprodukte oder überschüssige Modifizierungsreagenzien von der Partikeloberfläche abgereinigt. Vorzugsweise werden die in den einzelnen Prozessschritten anfallenden Abgase zumindest teilweise in den Mischer rückgeführt um Verluste an Organosilan bzw. Organosiloxan zu begrenzen. Es zeigte sich jedoch, dass aus technischen Gründen eine vollständige Rückführung der Abgase nicht möglich ist und zumindest ein Teil der Abgase aus der Anlage abgeführt werden muss, um die Anreicherung von Abspaltprodukten zu verhindern und Frisch-N₂ zur Inertisierung zuzuführen.

Das abzuführende Abgas muss zuvor von mitgerissenen Feststoffen befreit werden. Dies erfolgt mittels bekannter Methoden zur Feststoffabtrennung aus Gasströmen wie beispielsweise Filter gegebenenfalls in Kombination mit Zyklonen.

Die im Abgasstrom enthaltenen Organosilane bzw. Organosiloxane werden der Reaktion entzogen und senken so signifikant die Ausbeute an Produkt bezogen auf die eingesetzte Menge an Organosilan bzw. Organosiloxan. Ferner führen die Organosiliziumverbindungen im Abgasstrom zu einer Versottung des Filtergewebes, so dass es zu einem Druckanstieg vor Filter kommt und die Anlage zum Filterwechsel ausgefahren werden muss. Dies führt zu einem signifikanten Kostenanstieg durch den erhöhten Verbrauch an Filtermaterialien und Produktionsausfall. Durch eine Verringerung des Anlagendurchsatzes lässt sich zwar die Filterstandzeit verlängern, dies jedoch auf Kosten der produzierten Menge. Das Problem der Versottung des Filtergewebes tritt verstärkt beim Einsatz von schwerflüchtigen Organosiliziumverbindungen wie z.B. Organosiloxanen auf, die nicht unzersetzt verdampfbar sind und somit als feinverteiltes Aerosol mit den feinteiligen partikulären Feststoffe vermischt werden.

In der EP 1184425 A wird ein Verfahren zur Oberflächenmodifizierung von Kieselsäuren mit Organohalogensilanen beschrieben, wobei die Kieselsäure in einem Schritt in einem Fluidisierbehälter mit dampfförmigem, d.h. flüchtigem Organohalogensilan gemischt wird und im gleichen Behälter zur Reaktion gebracht wird. Ein Teilstrom der zu modifizierenden Kieselsäure wird dabei in die Abgasleitung des Fluidisierbehälters eindosiert, anschließend aus dem Abgas abgetrennt und schließlich in den Fluidisierbehälter zur Reaktion zurückgeführt, wobei die Temperatur im Fluidisierbehälter 400 bis 600 °C beträgt. Nachteilig an diesem Verfahren ist, dass der Teilstrom der Kieselsäure nach Abtrennung aus dem Abgas direkt in die heiße, mit Stickstoff fluidisierte Reaktionszone eindosiert wird und dadurch inhomogen modifizierte Produkte, d.h, Produkte mit einer breiten Verteilung des Silyliergrades erhalten werden. Zudem erfordert der beschriebene Prozess ein komplexes, schwer zu kontrollierendes Verfahren mit zusätzlichen Behältern und Ventilen um den abgetrennten Teilstrom in die Reaktion zurückzuführen.

Gegenstand der Erfindung ist ein Verfahren zur Herstellung von oberflächenmodifiziertem partikulärem feinteiligem Feststoff F mit großer Oberfläche, bei dem in einem Verfahrensschritt (A) eine Teilmenge an unmodifiziertem feinteiligen Feststoff F1 mit Organosiliziumverbindung vermischt wird, wobei ein Organosiliziumverbindung enthaltendes Abgas entsteht,
in einem Verfahrensschritt (B) die Mischung aus unmodifiziertem feinteiligem Feststoff F1 mit Organosiliziumverbindung zur Reaktion gebracht wird, wobei oberflächenmodifizierter feinverteilter Feststoff F und gegebenenfalls ein Organosiliziumverbindung enthaltendes Abgas entsteht,
in einem Verfahrensschritt (C) der oberflächenmodifizierte feinverteilte Feststoff F von adsorbierten Nebenprodukten und nicht abreagierter Organosiliziumverbindung befreit wird, welche als Abgas erhalten werden,
in einem Verfahrensschritt (D) eine weitere Teilmenge an unmodifiziertem feinteiligen Feststoff F1 in das in den Verfahrensschritten (A), (C) und gegebenenfalls (B) erhaltene Abgas eindosiert wird, wobei der Feststoff F1 mit im Abgas enthaltener Organosiliziumverbindung vermischt wird
und in einem Verfahrensschritt (E) die im Verfahrensschritt (D) erhaltene Mischung im Verfahrensschritt (A) zur Teilmenge an unmodifiziertem feinteiligen Feststoff F1 und Organosiliziumverbindung zugeführt wird.

Überraschenderweise wurde nun gefunden, dass bei der Oberflächenmodifizierung von partikulärem feinteiligem Feststoff F1 mit großer Oberfläche mit Organosiliziumverbindungen, insbesondere von schwerflüchtigen Organosiliziumverbindungen, die vorzugsweise als feinverteiltes Aerosol mit dem feinteiligen partikulären Feststoffe F1 vermischt werden, durch Eindosieren von unmodifiziertem feinteiligen partikulärem Feststoff F1 in den Abgasstrom vor Filter und Rückführung der im Gasstrom mit Organosiliziumverbindung beladenen Feststoffpartikel in den Mischer, die Standzeit der Filter deutlich verbessert werden konnte und gleichzeitig die Verluste an Organosiliziumverbindung reduziert werden konnten, ohne dabei die Qualität der Produkte nachteilig zu verändern.

Der Feststoff F1 wird in Verfahrensschritt (B) durch die Organosiliziumverbindungen, die eine Verbindung oder beliebige Gemische aus Organosiliziumverbindungen sind, silyliert.

Bevorzugte Organosiliziumverbindungen sind Organosilane der allgemeinen Formel (I)

X_{1+x'}-SiR⁴_{2-x'}-(CH₂)ᵥ-Y (I),

in der
**X** Halogen, Stickstoffrest, OR³ oder OCOR³,
**R³** C-O gebundener C₁-C₁₅-Kohlenwasserstoff-Rest, bevorzugt C₁-C₈-Kohlenwasserstoff-Rest, besonders bevorzugt C₁-C₃-Kohlenwasserstoff-Rest, oder Acetylrest,
**R⁴** Wasserstoffatom oder gegebenenfalls mit -CN, -NCO, -NR²₂, -COOH, -COOR², -Halogen, -Acryl, -Epoxy, -SH, -OH oder -CONR²₂ substituierter Si-C gebundenen C₁-C₂₀-Kohlenwasserstoffrest, bevorzugt C₁-C₈-Kohlenwasserstoff-Rest, besonders bevorzugt C₁-C₃-Kohlenwasserstoff-Rest, oder Arylrest, oder C₁-C₁₅-Kohlenwasserstoffoxyrest, bevorzugt C₁-C₈-Kohlenwasserstoffoxy-Rest, besonders bevorzugt C₁-C₄- Kohlenwasserstoffoxy-Rest, in denen jeweils eine oder mehrere, einander nicht benachbarte Methyleneinheiten durch Gruppen -O-, -CO-, -COO-, -OCO-, oder -OCOO-, -S-, oder -NR²- ersetzt sein können und in denen eine oder mehrere, einander nicht benachbarte Methineinheiten durch Gruppen, -N= oder -P= ersetzt sein können,
Y Wasserstoff, ungesättigter oder einfach oder mehrfach ungesättigter C₁-C₂₀-Kohlenwasserstoff-Rest, -OC(O)C(R)=CH₂,-Vinyl, -Hydroxyl, -Halogen, Phosphonato, -NCO, -NH-C(O)-OR¹,-Glycidoxy, -SH, Säureanhydride, wie Bernsteinsäureanhydrid,
R, R¹ C₁-C₁₅-Kohlenwasserstoff-Rest, bevorzugt C₁-C₈-Kohlenwasserstoff-Rest, besonders bevorzugt C₁-C₃-Kohlenwasserstoff-Rest),
v ganzzahlige Werte von 0 bis 10, bevorzugt 0 - 5 und besonders bevorzugt 0, 1, oder 3, und
x' die Werte 1 oder 2 bedeuten.

Bevorzugte Organosiliziumverbindungen sind auch Organosiloxane, aufgebaut aus A Einheiten der allgemeinen Formel (IIa) und B Einheiten der Formeln (IIb - d)

(R⁵₃SiO_{1/2}) (IIa),

(R⁵₂SiO_{2/2}) (IIb),

(R⁵SiO_{3/2}) (IIc),

(SiO_{4/2}) (IId),

wobei die Organosiloxane an Si-Atomen 1 oder 2 Gruppen -X enthalten können, wobei X die oben genannte Bedeutung hat, und die Organosiloxane die Gruppen ≡SiX oder =SiX₂ in einer Anzahl C aufweisen können und für A, B und C gilt:
1 ≤ B ≤ 5000, bevorzugt 3 ≤ B ≤ 1000, besonders bevorzugt 5 ≤ B ≤ 100 und in einer speziellen Ausführung 5 ≤ B ≤ 50 ist, mit der Maßgabe, dass B ≤ A+C, bevorzugt B > A+C und besonders bevorzugt B > 2 x (A+C) ist, wobei für A+B=0 gilt 10 ≤ B ≤ 100, vorzugsweise A + C ≤ 20 und besonders bevorzugt A + C ≤ 2, wobei das Verhältnis A zu C beliebig sein kann, und R⁵ ein gegebenenfalls einfach oder mehrfach ungesättigter, einwertiger, gegebenenfalls halogenierter Si-C-gebundener Kohlenwasserstoffrest mit 1 bis 18 C-Atomen, bevorzugt 1 bis 8 C-Atomen und besonders bevorzugt 1 bis 3 C-Atomen, ist.

Bevorzugt eingesetzte Organosilane der allgemeinen Formel I sind Organosilane mit dem Rest Y gleich Wasserstoff, Vinyl, Acrylat, Methacrylat, Glycidoxy, -SH, -OH, primärer Aminrest-NH₂, sekundäre Aminreste -NHR wie N-Monomethyl-, N-Monoethyl-, N-Monopropyl-, N-Monobutyl-, N-Cyclohexyl- oder der Anilinorest, tertiäre Aminreste -NR₂ wie der N,N-Dimethyl-, N,N-Diethyl-, N,N- Dipropyl-, N,N-Dibutyl-, N,N-Methylethyl-, N,N-Methylpropyl-, N,N-Ethylpropyl- oder N,N-Methylphenylrest oder der Morpholinorest, der Pyrrolylrest, der Indolylrest, der Pyrazoyl-, Imidazoyl- oder Piperidylrest, quartäre Aminreste wie der N,N,N-Trimethylammonium-, N,N,N-Triethylammonium- oder N,N,N-Tripropylammoniumrest, mit Y gleich Phosphonato, - P(O)(OR)₂ (R = Methyl, Ethyl, Phenyl), Isocyanato und geschützte Isocyanato-Gruppe -N(H)C(O)G, wobei die Schutzgruppe G bei thermischer Belastung abgespalten wird als H-G (H-G = 2-Hydroxybenzoesäuremethylester, 2-Hydroxypyridin, 1-Hydroxymethyl-1,2,4-Triazol,N,N-Diethylhydroxylamin, 2-Butanonoxim, Malonsäuredimethylester, Acetessigsäureethylester, Diisopropylamin, Benzyl-tert.-butylamin, Tert.-butylmethylamin, Tert.-Butylisopropylamin, 2-Isopropylimidazol, 3,5-Dimethylpyrazol und ε-Caprolactam), oder mit Y gleich Dihydro-3-yl-2,5-furandion.

Beispiele für R⁴ sind Alkylreste wie der Methylrest, Ethylrest, Propylreste wie der iso- oder n-Propylrest, Butylreste wie der t- oder n-Butylrest, Pentylreste wie der neo, die i- oder n-Pentylreste, Hexylreste wie der n-Hexylrest, n-Heptylrest, Octylreste wie der 2-Etyl-hexyl- oder n-Octylrest, Decylreste wie der n-Decyl, Dodecylreste wie der n-Dodecylrest, Hexadecylreste wie der n-Hexadecylrest, Octadecylreste wie der n-Octadecylrest, Arylreste wie der Phenyl-, Biphenyl- oder Naphthenylrest, Alkylarylreste wie der Benzyl-, Ethylphenyl-, Toluyl-, oder die Xylylreste. Bevorzugt sind Methylrest, Ethylrest oder Propylreste wie der iso- oder n-Pröpylrest und besonders bevorzugt der Methylrest.

Bevorzugt werden Organosiloxane der allgemeinen Formel II eingesetzt.

Beispiele für Organosiloxane sind lineare oder cyclische Dialkylsiloxane mit einer mittleren Anzahl an Dialkylsiloxyeinheiten von größer 2, bevorzugt größer 10 und bevorzugt kleiner 100, besonders bevorzugt kleiner 50.

Die Dialkylsiloxane sind vorzugsweise Dimethylsiloxane, besonders bevorzugt Polydimethylsiloxane.

Beispiele für lineare Polydimethylsiloxane sind solche mit den Endgruppen: Trimethylsiloxy, Dimethylhydroxysiloxy, Dimethylchlorsiloxy, Methyldichlorsiloxy, Dimethylmethoxysiloxy, Methyldimethoxysiloxy, Dimethylethoxysiloxy, Methyldiethoxysiloxy, Dimethylacetoxysiloxy, Methyldiacetoxysiloxy; besonders bevorzugt sind Trimethylsiloxy und Dimethylhydroxysiloxy.

Die Endgruppen können gleich oder unterschiedlich sein.

Zur Silylierung können oben genannte Organsilane oder Organosiloxane rein oder in beliebigen Mischungen eingesetzt werden, bevorzugt ist die Silylierung mittels Organosiloxanen.

Im Verfahrensschritt (B) wird die Reaktion, nämlich die Oberflächenbehandlung bevorzugt in einer Atmosphäre durchgeführt, die nicht zur Oxidation des oberflächenmodifizierten feinverteilten r Feststoffs F führt, d.h. bevorzugt in einer Atmosphäre mit weniger als 10 Vol.% Sauerstoff, besonders bevorzugt weniger als 2,5 Vol.%, beste Ergebnisse werden erzielt bei weniger als 1 Vol.% Sauerstoff.

Im Verfahrensschritt (B) entsteht neben dem oberflächenmodifizierten feinverteilten Feststoff F ein Abgas, das nicht abreagierte Organosiliziumverbindung und Nebenprodukte enthält.

Das Verfahren, insbesondere die Verfahrensschritte (A), (B) und (C) können als diskontinuierlicher oder kontinuierlicher Prozeß durchgeführt werden.

Aus technischen Gründen bevorzugt ist eine kontinuierliche Reaktionsführung.

Vorzugsweise erfolgen die Verfahrensschritte (A), (B) und (C) in jeweils einem eigenen Behälter, d.h. unter räumlicher Trennung. Die räumliche Trennung kann dabei erzielt werden z.B. durch Klappen, Schleusen, Pumpen oder andere Apparate.

Der Verfahrensschritt (A), das Vermischen von unmodifiziertem feinteiligen Feststoff F1 mit Organosiliziumverbindung erfolgt bevorzugt bei Temperaturen von -30 bis 250 °C, bevorzugt 0 bis 200 °C, im besonderen bevorzugt 20 bis 150 °C; in einer speziellen Ausführung erfolgt der Belegungsschritt bei 30 bis 120 °C.

Die Verweilzeit im Verfahrensschritt (A), beträgt 1 Min - 24 h, bevorzugt 15 Min bis 300 Min, aus Gründen der Raumzeitausbeute besonders bevorzugt 15 Min bis 240 Min.

Der Druck im Verfahrensschritt (A) reicht von schwachem Unterdruck bis 0,2 bar bis zum Überdruck von 100 bar, wobei aus technischen Gründen Normaldruck, das heißt druckfreies Arbeiten gegenüber Außen-/Atmosphären-Druck bevorzugt ist.

Die Organosiliziumverbindungen werden bevorzugt in flüssiger Form oder Dampfform zugefügt, und insbesondere dem unmodifiziertem feinteiligen Feststoff F1 zugemischt.

Besonders bevorzugt ist die Zumischung der Organosiliziumverbindungen in flüssiger Form, d.h. als feinverteiltes Aerosol. Bevorzugt weist das Aerosol eine Sinkgeschwindigkeit von 0,1 - 20 cm/s auf. Die Messung der Sinkgeschwindigkeit kann beispielsweise mittels Laser-Doppler-Anemometrie bzw. Phasen-Doppler-Anemometrie erfolgen.

Die Organosiliziumverbindungen können dabei in reiner Form oder als Lösungen in bekannten technisch eingesetzten Lösungsmitteln wie z.B. Alkoholen wie z.B. Methanol, Ethanol, oder i-Propanol, Ethern wie z.B. Diethylether, THF, oder Dioxan, oder Kohlenwasserstoffen wie z.B. Hexanen oder Toluol zugemischt werden. Die Konzentration in der Lösung beträgt dabei 5 - 95 Gew.%, bevorzugt 30 - 95 Gew.%, besonders bevorzugt 50 - 95 Gew.%. Besonders bevorzugt ist die Zumischung in reiner Form.

Das Zumischen geschieht vorzugsweise durch Düsentechniken, oder vergleichbare Techniken, wie effektive Verdüsungstechniken, wie Verdüsen in 1-Stoffdüsen unter Druck, vorzugsweise 5 bis 20 bar, Versprühen in 2-Stoffdüsen unter Druck, vorzugsweise Gas und Flüssigkeit 2-20 bar, Feinstverteilen mit Atomizern oder Gas-Feststoff-Austauschaggregaten mit beweglichen, rotierenden oder statischen Einbauten, die eine homogene Verteilung der Organosiliziumverbindungen erlauben.

Vorzugsweise ist im Verfahrensschritt (A) der Feststoff F1 fluidisiert. Vorzugsweise wird das Aerosol der Organosiliziumverbindungen in den fluidisierten Feststoff F1 hineingedüst, besonders bevorzugt von oben auf den fluidisierten Feststoff F1 aufgedüst.

Bevorzugt erfolgen die Vermischung mit den Organosiliziumverbindungen im Verfahrensschritt (A) und die Reaktion im Verfahrensschritt (B) unter mechanischer oder gasgetragener Fluidisierung. Besonders bevorzugt ist die mechanische Fluidisierung. Eine Gas-getragene Fluidisierung kann durch alle inerten Gase erfolgen, die nicht mit den Organosiliziumverbindungen, dem feinteiligen Feststoff F1, und dem modifizierten Feststoff F reagieren, also nicht zu Nebenreaktionen, Abbaureaktionen, Oxidationsvorgängen und Flammen- und Explosionserscheinungen führen, wie vorzugsweise N₂, Ar, andere Edelgase, CO₂, etc. Die Zuführung der Gase zur Fluidisierung erfolgt bevorzugt im Bereich von Leerrohrgasgeschwindigkeiten von 0,05 bis 5 cm/s, besonders bevorzugt von 0,5-2,5 cm/s.

Besonders bevorzugt ist die mechanische Fluidisierung, die ohne zusätzlichen über die Inertisierung hinausgehenden Gaseinsatz, durch Flügelrührer, Ankerrührer, und sonstige geeignete Rührorgane erfolgt.

Auf 100 Gewichtsteile an im Verfahrensschritt (A) eingesetztem Feststoff F1 werden im Verfahrensschritt (D) vorzugsweise 1 bis 50 Gewichtsteile, besonders bevorzugt 2 bis 30 Gewichtsteile, insbesondere 5 bis 20 Gewichtsteile an Feststoff F1 eindosiert.

Die Reaktion im Verfahrensschritt (B) erfolgt bevorzugt bei Produkttemperaturen von 20 - 400 °C, bevorzugt 50 - 380 °C und besonders bevorzugt bei 60 - 350 °C.

In einer bevorzugten Ausführungsform erfolgt die Reaktion bei einer konstanten Wandtemperatur. Dies bedeutet, dass die Wandtemperatur des Reaktionsbehälters in einem Bereich von 20 - 400 °C, bevorzugt in einem Bereich von 50 - 380 °C und besonders bevorzugt in einem Bereich von 60 - 350 °C liegt.

In einer weiteren bevorzugten Ausführungsform erfolgt die Reaktion im Verfahrensschritt (B) in einem Temperaturgradienten im Bereich von 20 °C bis 400 °C, bevorzugt in einem Bereich von 50 bis 380 °C und besonders bevorzugt in einem Bereich von 60 bis 350 °C, wobei die Reaktionstemperatur im Laufe der Reaktionszeit ansteigt.

Dies bedeutet, dass zu Beginn der Reaktion die Wandtemperatur des Reaktionsbehälters in einem Bereich von 20 - 300 °C, bevorzugt in einem Bereich von 50 - 250 °C und besonders bevorzugt in einem Bereich von 60 - 200 liegt, und dass gegen Ende der Reaktion die Wandtemperatur des Reaktionsbehälters in einem Bereich von 30 - 400 °C, bevorzugt in einem Bereich von 60 - 380 °C und besonders bevorzugt in einem Bereich von 70 bis 350 °C liegt, mit der Maßgabe, dass die Temperaturdifferenz zwischen der Wandtemperatur zu Beginn der Reaktion und der Wandtemperatur am Ende der Reaktion in einem Bereich von 10 bis 200 °C, bevorzugt 20 bis 180 °C und besonders bevorzugt 30 bis 150 °C liegt und die Wandtemperatur zu Beginn der Reaktion niedriger ist als am Ende der Reaktion.

Dies bedeutet ferner, dass die Produkttemperatur zu Beginn der Reaktion in einem Bereich von 20 - 300 °C, bevorzugt in einem Bereich von 50 - 250 °C und besonders bevorzugt in einem Bereich von 60 - 200 liegt, und dass die Produkttemperatur gegen Ende der Reaktion in einem Bereich von 30 - 400 °C, bevorzugt in einem Bereich von 60 - 380 °C und besonders bevorzugt in einem Bereich von 70 bis 350 °C liegt, mit der Maßgabe, dass die Temperaturdifferenz zwischen der Produkttemperatur zu Beginn der Reaktion und der Produkttemperatur am Ende der Reaktion in einem Bereich von 10 bis 200 °C, bevorzugt 20 bis 180 °C und besonders bevorzugt 30 bis 150 °C liegt und die Produkttemperatur zu Beginn der Reaktion niedriger ist als am Ende der Reaktion.

Dies bedeutet, dass je nach Prozessdurchführung, d.h. kontinuierlicher oder diskontinuierlicher Prozessdurchführung, der Temperaturgradient abhängig vom Ort dT/dx (kontinuierlich) oder abhängig von der Zeit dT/dt (diskontinuierlich) sein kann.

Die Reaktionstemperatur im Verfahrensschritt (B), d.h. die Wand- bzw. Produkttemperatur und deren Gradient kann dabei gemäß folgender Verfahren erreicht werden.

### 1. Kontinuierlicher Prozeßverlauf (d.h. dT/dx):

- Der Feststoff F1 wird mittels Gas-getragener oder mechanischer Fluidisierung/Förderung durch eine Heizzone mit ansteigender Wandtemperatur gefördert. Die Wandtemperatur kann dabei kontinuierlich oder in Stufen ansteigen. Im Fall eines stufenweisen Anstiegs kann die Reaktionszone aus bis zu 10 separaten Heizzonen unterschiedlicher Temperatur, bevorzugt 5 separaten Heizzonen unterschiedlicher Temperatur, besonders bevorzugt 3 separaten Heizzonen unterschiedlicher Temperatur , in einer speziellen Ausführung aus 2 separaten Heizzonen unterschiedlicher Temperatur bestehen. Gegebenenfalls können die einzelnen Heizzonen durch Klappen voneinander getrennt sein. Der Reaktionsbehälter kann senkrecht oder waagerecht stehen. Bevorzugt ist die senkrechte Ausführung. Bei senkrechter Ausführung kann der Feststoff F1 von unten nach oben oder von oben nach unten die Reaktionszone durchlaufen. Bevorzugt ist von oben nach unten.

Oder:
- Der Feststoff F1 wird mittels Gas-getragener oder mechanischer Fluidisierung/Förderung durch separate Reaktionsbehälter mit unterschiedlicher, d.h. ansteigender Wandtemperatur gefördert. Die Reaktionskaskade kann dabei aus bis zu 10 Reaktionsbehältern unterschiedlicher Wandtemperatur, bevorzugt bis zu 5 Reaktionsbehältern unterschiedlicher Wandtemperatur, besonders bevorzugt bis zu 3 Reaktionsbehältern unterschiedlicher Wandtemperatur, und in einer speziellen Ausführung aus 2 Reaktionsbehältern unterschiedlicher Wandtemperatur bestehen. Die Reaktionsbehälter können senkrecht oder waagerecht stehen. Bevorzugt ist die senkrechte Ausführung. Bei senkrechter Ausführung kann der Feststoff F1 von unten nach oben oder von oben nach unten die Reaktionszone durchlaufen. Bevorzugt ist von oben nach unten.

Oder:
- Der Feststoff F1 wird mittels mechanischer Fluidisierung/Förderung durch einen senkrecht stehenden Reaktionsbehälter gefördert. Der Reaktionsbehälter wird im unteren Teil auf die maximale Reaktionstemperatur beheizt. Im Reaktionsbehälter stellt sich dann ein Temperaturgefälle zwischen dem oberen Teil des Reaktionsbehälters (niedrigste Temperatur) und dem unteren Teil des Reaktionsbehälters (höchste Temperatur) ein. Dieses kann beispielsweise durch geeignete Rührtechnik gesteuert werden.

### 2. Diskontinuierlicher Produktionsverlauf (Batchbetrieb)

- Der Feststoff F1 wird mittels Inertgas oder mechanisches Rühren im Reaktionsbehälter fluidisiert. Im Laufe der Reaktionsdauer wird die Reaktionstemperatur im Reaktionsbehälter sukzessive, d.h. in Form einer Rampe oder stufenweise erhöht.

Die Verweilzeit pro Reaktionstemperatur liegt bevorzugt zwischen 5 min und 240 min, besonders bevorzugt zwischen 10 min und 180 min und insbesondere zwischen 15 min und 120 min.

Die Beheizung der Reaktionszone kann z.B. über die Behälterwand z.B. mittels elektrischer Beheizung oder mittels Temperierflüssigkeit oder Dampf erfolgen. Gegebenenfalls können im Reaktionsgefäß z.B. Heizschlangen eingesetzt werden.

Gegebenenfalls kann die Beheizung von außen über Infrarotstrahler erfolgen.

Die Temperaturmessung von Wand- und Produkttemperatur kann mittels üblicherweise eingesetzten Meßinstrumenten wie Thermoelementen, Widerstandsthermometern, Bimetallthermometern, IR-Sensoren oder anderen erfolgen.

Die Gesamtreaktionszeit beträgt 10 Min bis 48 h, bevorzugt 15 Min bis 5 h, besonders bevorzugt 15 min bis 4 h.

Gegebenenfalls können im Verfahrensschritt (A) protische Lösungsmittel hinzugefügt werden, wie flüssige oder verdampfbare Alkohole oder Wasser; typische Alkohole sind iso-Propanol, Ethanol und Methanol. Es können auch Gemische der oben genannten protischen Lösungsmittel zugefügt werden. Vorzugsweise werden 1 bis 50 Gew.% an protischen Lösungsmittel bezogen auf den Feststoff F zugefügt, besonders bevorzugt 5 bis 25%. Besonders bevorzugt ist Wasser.

Wahlweise können saure Katalysatoren, von saurem Charakter im Sinne einer Lewis Säure oder einer Brönsted Säure, wie Chlorwasserstoff oder basische Katalysatoren, von basischem Charakter im Sinne einer Lewis Base oder einer Brönsted Base, wie Ammoniak oder Amine wie Triethylamin, zugesetzt werden. Bevorzugt werden diese in Spuren zugesetzt, d.h. kleiner als 1000 ppm. Besonders bevorzugt werden keine Katalysatoren zugesetzt.

Die Abreinigung des oberflächenmodifizierten Feststoffs F vom Abgas im Verfahrensschritt (C) erfolgt vorzugsweise bei einer Reinigungstemperatur von 20 bis 200 °C, bevorzugt 50°C bis 180°C, besonders bevorzugt von 50 bis 150 °C.

Der Reinigungsschritt (C) ist vorzugsweise durch Bewegung gekennzeichnet, wobei langsame Bewegung und geringes Durchmischen besonders bevorzugt ist. Die Rührorgane werden dabei vorteilhafterweise so eingestellt und bewegt, dass bevorzugt ein Mischen und ein Fluidisieren, jedoch nicht völlige Verwirbelung, eintritt.

Der Reinigungsschritt (C) kann weiterhin durch erhöhten Gaseintrag gekennzeichnet sein, entsprechend einer Leerrohrgasgeschwindigkeit von vorzugsweise 0,001 bis 10 cm/s, bevorzugt 0,01 bis 1 cm/s. Dies kann durch alle inerten Gase erfolgen, die nicht mit den Orgänosiliziumverbindung, dem Feststoff F1, und dem modifizierten Feststoff F reagieren, also nicht zu Nebenreaktionen, Abbaureaktionen, Oxidationsvorgängen und Flammen- und Explosionserscheinungen führen, wie vorzugsweise N₂, Ar, andere Edelgase, CO₂, etc.

In einer besonders bevorzugten Ausführung werden nicht abreagierte Organosiliziumverbindungen aus dem Abgas aus dem Reinigungsschritt (C) wieder in den Verfahrensschritt (A) zurückgeführt; dies kann teilweise oder vollständig geschehen, bevorzugt zu 10 - 90 % des gesamten Volumenstromes der aus der Abreinigung (C) austretenden Gasvolumina. Vorzugsweise wird das Abgas aus dem Reinigungsschritt (C) wieder in den Verfahrensschritt (A) zurückgeführt. Dies geschieht vorzugsweise in geeignet temperierten Vorrichtungen.

Diese Rückführung erfolgt bevorzugt in nicht-kondensierter Phase, also als Gas oder als Dampf. Diese Rückführung kann als Stofftransport entlang eines Druckausgleichs erfolgen oder als gesteuerter Stofftransport mit den technisch üblichen Systemen des Gastransports, wie Ventilatoren, Pumpen, Druckluftmembranpumpen. Da die Rückführung der nichtkondensierten Phase bevorzugt ist, empfiehlt sich gegebenenfalls die Beheizung der rückführenden Leitungen.

Die Rückführung der Abgase kann dabei zwischen vorzugsweise 5 und 100 Gew.%, bezogen auf deren Gesamtmasse, bevorzugt zwischen 30 und 80 Gew.% liegen. Die Rückführung kann dabei, bezogen auf 100 Teile frisch eingesetztes Organosiliziumverbindungen zwischen 1 und 200 Teile, bevorzugt 10 bis 30 Teile betragen.

Die Rückführung der Organosiliziumverbindungen oder der Abgase in den Verfahrensschritt (A) erfolgt bevorzugt kontinuierlich.

Zusätzlich können während Verfahrensschritt (A) oder im Anschluß an Verfahrensschritt (C) Verfahren zur mechanischen Verdichtung des Feststoffs F eingesetzt werden, wie zum Beispiel Presswalzen, Mahlaggregate, wie Kollergänge und wie Kugelmühlen, kontinuierlich oder diskontinuierlich, Verdichtung durch Schnecken oder Schraubenmischer, Schraubenverdichter, Brikettierer, oder Verdichten durch Absaugen des Luft- oder Gasinhaltes durch geeignete Vakuummethoden.

Besonders bevorzugt ist die mechanische Verdichtung während der Modifizierung, im Schritt (B) der Reaktion durch Presswalzen, oben genannte Mahlaggregate wie Kugelmühlen oder Verdichtung durch Schnecken, Schraubenmischer, Schraubenverdichter, Brikettierer.

In einer weiteren besonders bevorzugten Verfahrensweise werden im Anschluß an Verfahrensschritt (C) Verfahren zur mechanischen Verdichtung des Feststoffs F eingesetzt, wie Verdichten durch Absaugen des Luft- oder Gasinhaltes durch geeignete Vakuummethoden oder Presswalzen oder Kombination von beiden Verfahren.

Zusätzlich können in einer besonders bevorzugten Verfahrensweise im Anschluß an Verfahrensschritt (C) Verfahren zur Desagglomerierung des Feststoffs F eingesetzt werden, wie Stiftmühlen, Hammermühlen, Gegenstrommühlen, Prallmühlen oder Vorrichtungen zur Mahlsichtung.

Zur Sicherstellung einer inerten Gasatmosphäre, d.h. eine Gasatmosphäre von bevorzugt weniger als 10 Vol.% Sauerstoff, besonders bevorzugt weniger als 2,5 Vol.%, in einer speziellen Ausführung weniger als 1 Vol.% Sauerstoff, während der Verfahrensschritte (A), (B), (C) und (D), wird der Anlage bevorzugt Frisch-Stickstoff zugeführt.

Dies kann erfolgen über spezielle Zuführungen wie Gasstutzen an den einzelnen Apparaten, wie Mischer, Reaktoren, Trockner,
und/oder in Form von Lagerspülgas oder als Transportgas bei der gasgetragenen Förderung der unmodifierten feinteiligen partikulären Feststoffe F1 in die Anlage bzw. der modifizierten feinteiligen partikulären Feststoffe F in der Anlage.
Der Volumenanteil des pro 1 Stunde zugeführten Frisch-Stickstoffs bezogen auf das Gesamtvolumen der Anlage beträgt 1 bis 1000%, bevorzugt 50 bis 800% und besonders bevorzugt 100 bis 500%.
Zur Vermeidung eines Überdrucks in der Anlage muss bei Anwendung einer inerten Gasatmosphäre somit zumindest ein Teil des Abgases aus den Prozessschritten (A), (B) und (C) aus der Anlage abgeführt werden.

Dies erfolgt in der Art, dass die Abgase der Prozessschritte (A), (B) und (C) in einer Abgasleitung zusammengeführt werden, einer Feststoffabscheidevorrichtung zugeführt werden und anschließend das von Feststoffen befreite Abgas fachgerecht entsorgt wird. Bei den Feststoffabscheidevorrichtungen kann es sich beispielsweise um Zyklone, Filter oder deren beliebige Kombinationen handeln. In die Abgasleitung wird vorzugsweise vor der ersten Feststoffabscheidevorrichtung im Gegenstrom ein Teilstrom des unmodifizierten feinteiligen partikulären Feststoffs F1 eindosiert. Der unmodifizierte Feststoff F1 wird dabei mit den im Abgas enthaltenen Organosiliziumverbindungen bzw. den daraus resultierenden siliziumhaltigen Abspalt-, Kondensations- oder Polymerationsprodukten beladen und der so beladene Feststoff F in den Mischer im Verfahrensschritt (A) eingeleitet.

Vorzugsweise wird der Teilstrom des unmodifizierten feinteiligen partikulären Feststoffs F1 nach der Feststoffdosierung zum Mischer abgezweigt und in die Abgasleitung eindosiert. Die Feststoffdosierung kann mittels bekannter Verfahren volumetrisch bzw. gravimetrisch erfolgen. Bevorzugt ist gravimetrische Dosierung.

Die Eindosierung des Partikelteilstroms in die Abgasleitung kann mittels üblicher Fördertechniken erfolgen. Bevorzugt ist die Förderung mittels Feststoffpumpen wie z.B. Druckluftmembranpumpen.

Die Temperatur des Abgases liegt dabei vorzugsweise mindestens 10 °C, bevorzugt mindestens 50 °C oberhalb der höchsten Taupunkt-Temperatur der unzersetzt verdampfbaren Einzelkomponenten im Abgas.

Die Temperatur der Abgase beträgt 50 °C bis 400 °C, bevorzugt 100 °C bis 300 °C und besonders bevorzugt 150 bis 250 °C. Vorzugsweise wird das Abgas z.B. mittels Wärmetauscher oder zumischen von Kühlgas, vorzugsweise Kühl-Stickstoff, gekühlt.

Beim erfindungsgemäßen Verfahren ist der Verlust an eingesetzter Organosiliziumverbindung vorzugsweise kleiner als 50%, besonders bevorzugt kleiner als 40%, insbesondere kleiner als 30% und in einer speziellen Ausführung kleiner als 20%.

Im erfindungsgemäßen Verfahren wird vorzugsweise ein feinteiliger partikulärer Feststoff F1 mit einer mittleren Partikelgröße kleiner 100 µm, insbesondere bevorzugt mit einer mittleren Primärteilchen-Partikelgröße von 5 bis 100 nm eingesetzt. Dabei können diese Primärteilchen nicht isoliert existieren, sondern sind Bestandteile größerer Aggregate und Agglomerate.

Bevorzugte Feststoffe F1 sind Metalloxide, Silikate, Aluminate, Titanate, oder Aluminiumschichtsilikate, wie Bentonite, wie Montmorillonite, oder Smektite oder Hektorite.

Bevorzugte Feststoffe sind Metalloxide. Vorzugsweise weist das Metalloxid eine spezifische Oberfläche von vorzugsweise 0,1 bis 1000 m²/g (gemessen nach der BET Methode nach DIN 66131 und 66132) auf, besonders bevorzugt von 10 bis 500 m²/g, ganz besonders bevorzugt von 30 bis 450 m²/g. Bei den vorgenannten Definitionen handelt es sich im Sinne der vorliegenden Erfindung auch um die bevorzugte Definition einer großen spezifischen Oberfläche.

Das Metalloxid kann Aggregate (Definition nach DIN 53206) vorzugsweise im Bereich von Durchmessern 100 bis 1000 nm aufweisen, wobei das Metalloxid aus Aggregaten aufgebaute Agglomerate (Definition nach DIN 53206) aufweist, die in Abhängigkeit von der äußeren Scherbelastung (z.B. bedingt durch die Messbedingungen) Größen von 1 bis 1000 µm aufweisen können.

Das Metalloxid ist aus Gründen der technischen Handhabbarkeit vorzugsweise ein Oxid mit kovalentem Bindungs-Anteil in der Metall-Sauerstoff-Bindung, vorzugsweise ein Oxid der Haupt- und Nebengruppenelemente, wie der 3. Hauptgruppe, wie Bor-, Aluminium-, Gallium- oder Indiumoxid, oder der 4. Hauptgruppe wie Siliciumdioxid, Germaniumdioxid, oder Zinnoxid oder -dioxid, Bleioxid oder -dioxid, oder ein Oxid der 4. Nebengruppe, wie Titandioxid, Zirkonoxid, oder Hafniumoxid. Andere Beispiele für geeignete Metalloxide sind stabile Nickel-, Cobalt-, Eisen-, Mangan-, Chrom- oder Vanadiumoxide.

Als Metalloxid besonders bevorzugt sind Aluminium(III)-, Titan(IV)- und Silicium(IV)oxid, wie z.B. nasschemisch hergestellte, beispielsweise gefällte Kieselsäuren oder Kieselgele, oder in Prozessen bei erhöhter Temperatur hergestellte Aluminiumoxide, Titandioxide oder Siliciumdioxide, wie zum Beispiel pyrogen hergestellte Aluminiumoxide, Titandioxide oder Siliciumdioxide oder Kieselsäure.

Als Metalloxid insbesondere bevorzugt ist pyrogene Kieselsäure, die in einer Flammenreaktion vorzugsweise aus Organosiliciumverbindungen, z.B. aus Siliciumtetrachlorid oder Methyldichlorsilan, oder Hydrogentrichlorsilan oder Hydrogenmethyldichlorsilan, oder anderen Methylchlorsilanen oder Alkylchlorsilanen, auch in Gemisch mit Kohlenwasserstoffen, oder beliebigen verflüchtigbaren oder versprühbaren Gemischen aus Organosiliciumverbindungen, wie genannt, und Kohlenwasserstoffen, z.B. in einer Wasserstoff-Sauerstoff-Flamme, oder auch einer Kohlenmonoxid-Sauerstoffflamme, hergestellt wird. Die Herstellung der Kieselsäure kann dabei wahlweise mit und ohne zusätzlichem zusatz von Wasser erfolgen, zum Beispiel im Schritt der Reinigung; bevorzugt ist kein Zusatz von Wasser.

Vorzugsweise weist die pyrogene Kieselsäure eine fraktale Dimension der Oberfläche von vorzugsweise kleiner oder gleich 2,3 auf, besonders bevorzugt von kleiner oder gleich 2,1, im besonderen bevorzugt von 1,95 bis 2,05, wobei die fraktale Dimension der Oberfläche D_{S} definiert ist als:
Partikel-Oberfläche A ist proportional zum Partikel-Radius R hoch Ds
Die fraktale Dimension der Oberfläche wurde bestimmt mittels Kleinwinkelröntgenbeugung (SAXS).

Vorzugsweise weist die Kieselsäure eine fraktalen Dimension der Masse Dₘ von vorzugsweise kleiner oder gleich als 2,8, bevorzugt gleich oder größer 2,7, besonders bevorzugt von 2,4 bis 2,6 auf. Die fraktale Dimension der Masse Dₘ ist hierbei definiert als:
Partikel-Masse M ist proportional zum Partikel-Radius R hoch Dₘ.

Die fraktale Dimension der Masse wurde bestimmt mittels Kleinwinkelröntgenbeugung (SAXS).

Die modifizierten partikulären Feststoffe F weisen einen Gehalt an Kohlenstoff, gemessen mittels Elementaranalyse von bevorzugt 0,1 bis 20 Gew%, besonders bevorzugt 0,5 bis 15 Gew% und insbesondere bevorzugt von 1 bis 12 Gew% auf.

Die Feststoffe F weisen einen Gehalt an Oberflächensilanolgruppen SiOH von 0,1 bis 1,7 SiOH/nm², bevorzugt 0,1 bis 1,5 SiOH/nm², besonders bevorzugt von 0,1 bis 1,0 SiOH/nm² und in einer speziellen Ausführung von 0,1 bis 0,75 SiOH/nm² auf. Die Bestimmung der Oberflächensilanolgruppendichte erfolgt dabei mittel Säure-Basen-Titration.

Die Feststoffe F sind ferner durch eine besonders homogene Modifizierung der Oberfläche gekennzeichnet. Dies bedeutet, dass der wasserbenetzbare Anteil an modifizierten partikulären Feststoffen F kleiner als 10 Gew%, bevorzugt kleiner als 5 Gew%, besonders bevorzugt kleiner als 1 Gew%, ganz besonders bevorzugt kleiner als 0,1 Gew% ist, und in einer speziellen Ausführung kein wasserbenetzbarer Anteil nachweisbar ist. Die Bestimmung des wasserbenetzbaren Anteils erfolgt dabei mittels Einschütteln einer definierten Menge Pulver in Wasser.

Die folgenden Beispiele dienen der weiteren Erläuterung der Erfindung.

### Beispiel 1:

Der Versuch wird durchgeführt in einer kontinuierlich betriebenen Anlage bestehend aus einem Mischer, einem senkrechten Reaktor und einem Trockner, wobei die Abgase aus Mischer, Reaktor und Trockner gesammelt und über einen Filter aus der Anlage abgeführt werden. In den Abgasstrom wird vor dem Filter eine Teilmenge der hydrophilen pyrogenen Kieselsäure eindosiert und nach Abreinigung vom Filter in den Mischer zurückgeführt. Zur Bestimmung der Filterbelastung wird der Druckabfall am Filter bestimmt.

In die kontinuierliche Anlage werden im Mischer bei einer Temperatur von 30 °C unter Inertgas N₂, unter mechanischem Fluidisieren mittels Rührer, zu einem Massestrom von 900 g/h an hydrophiler KIESELSÄURE, mit einer Feuchte kleiner 1% und einem HCl-Gehalt kleiner 100 ppm und mit einer spezifischen Oberfläche von 200 m²/g (gemessen nach der BET Methode nach DIN 66131 und 66132) (erhältlich unter dem Namen WACKER HDK N20 bei Wacker Chemie AG, München, D), 180 g/h eines dimethylhydroxysiloxy-endständigen Polydimethylsiloxans mit einer Viskosität bei 25 °C von 20 mPas in flüssiger, feinstverteilter Form durch Verdüsen über eine Einstoffdüse als Aerosol (Druck 10 bar) zugefügt. Zusätzlich werden weitere 100 g/h an hydrophiler KIESELSÄURE, mit einer Feuchte kleiner 1% und einem HCl-Gehalt kleiner 100 ppm und mit einer spezifischen Oberfläche von 200 m²/g (gemessen nach der BET Methode nach DIN 66131 und 66132) (erhältlich unter dem Namen WACKER HDK N20 bei Wacker Chemie AG, München, D) in die Abgasleitung eindosiert und nach Abreinigung vom Filter in den Mischer zurückgeführt. Die so beladene KIESELSÄURE wird im Reaktor bei einer Verweilzeit von 1 Stunde bei einer Wandtemperatur von 215 °C im Kopfbereich des Reaktors und einer Wandtemperatur von 330 °C im Bodenbereich des Reaktors zur Reaktion gebracht und dabei weiter mittels Rühren fluidisiert, und anschließend in einem Trockner bei 150 °C und 0,5 Stunden Verweilzeit gereinigt. Die Analysedaten sind in Tabelle 1 aufgeführt.

### Beispiel 2:

Es wird analog zu Beispiel 1 vorgegangen. Statt eines Dimethylhydroxysiloxy-endständigen Polydimethylsiloxans wird ein Trimethylsiloxy-endständiges Polydimethylsiloxan mit einer Viskosität bei 25 °C von 20 mPas eingesetzt. Die Analysedaten sind in Tabelle 1 aufgeführt.

### Beispiel 3:

In die kontinuierliche Anlage von Beispiel 1 werden im Mischer bei einer Temperatur von 30 °C unter Inertgas N₂, unter mechanischem Fluidisieren mittels Rührer, zu einem Massestrom von 900 g/h an hydrophiler KIESELSÄURE, mit einer Feuchte kleiner 1% und einem HCl-Gehalt kleiner 100 ppm und mit einer spezifischen Oberfläche von 200 m²/g (gemessen nach der BET Methode nach DIN 66131 und 66132) (erhältlich unter dem Namen WACKER HDK N20 bei Wacker Chemie AG, München, D), 100 g/h Dimethyldichlorsilan in flüssiger, feinstverteilter Form durch Verdüsen über eine Einstoffdüse als Aerosol (Druck 10 bar) und 100 g/h vollentsalztes Wasser in flüssiger, feinstverteilter Form durch Verdüsen über eine Einstoffdüse als Aerosol (Druck 10 bar) zugefügt. Zusätzlich werden weitere 100 g/h an hydrophiler KIESELSÄURE, mit einer Feuchte kleiner 1% und einem HCl-Gehalt kleiner 100 ppm und mit einer spezifischen Oberfläche von 200 m²/g (gemessen nach der BET Methode nach DIN 66131 und 66132) (erhältlich unter dem Namen WACKER HDK N20 bei Wacker Chemie AG, München, D) in die Abgasleitung eindosiert und nach Abreinigung vom Filter in den Mischer zurückgeführt. Die so beladene KIESELSÄURE wird im Reaktor bei einer Verweilzeit von 1 Stunde bei einer Wandtemperatur von 200 °C im Kopfbereich des Reaktors und einer Wandtemperatur von 235 °C im Bodenbereich des Reaktors zur Reaktion gebracht und dabei weiter mittels Rühren fluidisiert, und anschließend in einem Trockner bei 150 °C und 0,5 Stunden Verweilzeit gereinigt. Die Analysedaten sind in Tabelle 1 aufgeführt.

### Beispiel 4 (nicht erfindungsgemäß):

In die kontinuierliche Anlage von Beispiel 1 werden im Mischer bei einer Temperatur von 30 °C unter Inertgas N₂, unter mechanischem Fluidisieren mittels Rührer, zu einem Massestrom von 1000 g/h an hydrophiler KIESELSÄURE, mit einer Feuchte kleiner 1% und einem HCl-Gehalt kleiner 100 ppm und mit einer spezifischen Oberfläche von 200 m²/g (gemessen nach der BET Methode nach DIN 66131 und 66132) (erhältlich unter dem Namen WACKER HDK N20 bei Wacker Chemie AG, München, D), 180 g/h eines dimethylhydroxysiloxy-endständigen Polydimethylsiloxans mit einer Viskosität bei 25 °C von 20 mPas in flüssiger, feinstverteilter Form durch Verdüsen über eine Einstoffdüse als Aerosol (Druck 10 bar) zugefügt. In die Abgasleitung wird keine weitere Kieselsäure eindosiert und nach Abreinigung vom Filter in den Mischer zurückgeführt. Die so beladene KIESELSÄURE wird im Reaktor bei einer Verweilzeit von 1 Stunde bei einer Wandtemperatur von 215 °C im Kopfbereich des Reaktors und einer Wandtemperatur von 330 °C im Bodenbereich des Reaktors zur Reaktion gebracht und dabei weiter mittels Rühren fluidisiert, und anschließend in einem Trockner bei 150 °C und 0,5 Stunden Verweilzeit gereinigt. Die Analysedaten sind in Tabelle 1 aufgeführt.

### Beispiel 5 (nicht erfindungsgemäß):

In die kontinuierliche Anlage werden im Mischer bei einer Temperatur von 30 °C unter Inertgas N₂, unter mechanischem Fluidisieren mittels Rührer, zu einem Massestrom von 1000 g/h an hydrophiler KIESELSÄURE, mit einer Feuchte kleiner 1% und einem HCl-Gehalt kleiner 100 ppm und mit einer spezifischen Oberfläche von 200 m²/g (gemessen nach der BET Methode nach DIN 66131 und 66132) (erhältlich unter dem Namen WACKER HDK N20 bei Wacker Chemie AG, München, D), 180 g/h eines dimethylhydroxysiloxy-endständigen Polydimethylsiloxans mit einer Viskosität bei 25 °C von 20 mPas in flüssiger, feinstverteilter Form durch Verdüsen über eine Einstoffdüse als Aerosol (Druck 10 bar) zugefügt. Zusätzlich werden weitere 100 g/h an hydrophiler KIESELSÄURE, mit einer Feuchte kleiner 1% und einem HCl-Gehalt kleiner 100 ppm und mit einer spezifischen Oberfläche von 200 m²/g (gemessen nach der BET Methode nach DIN 66131 und 66132) (erhältlich unter dem Namen WACKER HDK N20 bei Wacker Chemie AG, München, D) in die Abgasleitung eindosiert und nach Abreinigung vom Filter in den Reaktor zurückgeführt. Die so beladene KIESELSÄURE wird im Reaktor bei einer Verweilzeit von 1 Stunde bei einer Wandtemperatur von 215 °C im Kopfbereich des Reaktors und einer Wandtemperatur von 330 °C im Bodenbereich des Reaktors zur Reaktion gebracht und dabei weiter mittels Rühren fluidisiert, und anschließend in einem Trockner bei 150 °C und 0,5 Stunden Verweilzeit gereinigt. Die Analysedaten sind in Tabelle 1 aufgeführt.

**Tabelle 1:**

| | Verlust Si-Organik [%] | Wasserbenetzbarer Anteil [%] | Druckabfall am Filter nach 2 h [mbar] | Gehalt Kohlenstoff [%] |
|---|---|---|---|---|
| Bsp. 1 | 17,1 | 0 | 1 | 4,1 |
| Bsp. 2 | 18,3 | 0 | 1 | 4,5 |
| Bsp. 3 | 13,7 | 0,08 | 3 | 1,8 |
| Bsp. 4* | 27,2 | 2,7 | 70 | 3,6 |
| Bsp. 5* | 19,2 | 0,3 | 10 | 4,0 |

| | | | | |
|---|---|---|---|---|
| *nicht erfindungsgemäß | | | | |

## Patentansprüche

1. Verfahren zur Herstellung von oberflächenmodifiziertem partikulärem feinteiligem Feststoff F mit großer Oberfläche, bei dem in einem Verfahrensschritt (A) eine Teilmenge an unmodifiziertem feinteiligen Feststoff F1 mit Organosiliziumverbindung vermischt wird, wobei ein Organosiliziumverbindung enthaltendes Abgas entsteht,
in einem Verfahrensschritt (B) die Mischung aus unmodifiziertem feinteiligem Feststoff F1 mit Organosiliziumverbindung zur Reaktion gebracht wird, wobei oberflächenmodifizierter feinverteilter Feststoff F und gegebenenfalls ein Organosiliziumverbindung enthaltendes Abgas entsteht,
in einem Verfahrensschritt (C) der oberflächenmodifizierte feinverteilte Feststoff F von adsorbierten Nebenprodukten und nicht abreagierter Organosiliziumverbindung befreit wird, welche als Abgas erhalten werden,
in einem Verfahrensschritt (D) eine weitere Teilmenge an unmodifiziertem feinteiligen Feststoff F1 in das in den Verfahrensschritten (A),(C) und gegebenenfalls (B) erhaltene Abgas eindosiert wird, wobei der Feststoff F1 mit im Abgas enthaltener Organosiliziumverbindung vermischt wird und in einem Verfahrensschritt (E) die im Verfahrensschritt (D) erhaltene Mischung im Verfahrensschritt (A) zur Teilmenge an unmodifiziertem feinteiligen Feststoff F1 und Organosiliziumverbindung zugeführt wird.

2. Verfahren nach Anspruch 1, bei dem die Organosiliziumverbindungen Organosilane der allgemeinen Formel (I)
X_{1+x'}-SiR⁴_{2-x'}-(CH₂)ᵥ-Y (I),
sind, in der
**X** Halogen, Stickstoffrest, OR³ oder OCOR³,
**R³** C-O gebundener C₁-C₁₅-Kohlenwasserstoff-Rest oder Acetylrest,
**R⁴** Wasserstoffatom oder gegebenenfalls mit -CN, -NCO, -NR²₂,COOH, -COOR², -Halogen, -Acryl, -Epoxy, -SH, -OH oder - CONR²₂ substituierter Si-C gebundenen C₁-C₂₀-Kohlenwasserstoffrest oder C₁-C₁₅-Kohlenwasserstoffoxyrest, bevorzugt, in denen jeweils eine oder mehrere, einander nicht benachbarte Methyleneinheiten durch Gruppen -O-, -CO-, -COO-, -OCO-, oder -OCOO-, -S-, oder -NR²- ersetzt sein können und in denen eine oder mehrere, einander nicht benachbarte Methineinheiten durch Gruppen, -N= oder -P= ersetzt sein können,
**Y** Wasserstoff, ungesättigter oder einfach oder mehrfach ungesättigter C₁-C₂₀-Kohlenwasserstoff-Rest, -OC(O)C(R)=CH₂,-Vinyl, -Hydroxyl, -Halogen, Phosphonato, -NCO, -NH-C(O)-OR¹, -Glycidoxy, -SH, Säureanhydride, wie Bernsteinsäureanhydrid,
**R, R¹** C₁-C₁₅-Kohlenwasserstoff-Rest,
**v** ganzzahlige Werte von 0 bis 10, und
**x'** die Werte 1 oder 2 bedeuten.

3. Verfahren nach einem der vorangehenden Ansprüche, bei dem die Organosiliziumverbindungen Organosiloxane, aufgebaut aus A Einheiten der allgemeinen Formel (IIa) und B Einheiten der Formeln (IIb - d)
(R⁵₃SiO_{1/2}) (IIa),
(R⁵₂SiO_{2/2}) (IIb),
(R⁵SiO_{3/2}) (IIc),
(SiO_{4/2}) (IId),
sind, wobei die Organosiloxane an Si-Atomen 1 oder 2 Gruppen -X enthalten können, wobei X die oben genannte Bedeutung hat, und die Organosiloxane die Gruppen =SiX oder =SiX₂ in einer Anzahl C aufweisen können und für A, B und C gilt: 1 ≤ B ≤ 5000, mit der Maßgabe, dass B ≥ A+C, wobei für A+B=0 gilt 10 ≤ B ≤ 100, wobei das Verhältnis A zu C beliebig sein kann, und
**R⁵** ein gegebenenfalls einfach oder mehrfach ungesättigter, einwertiger, gegebenenfalls halogenierter Si-C-gebundener Kohlenwasserstoffrest mit 1 bis 18 C-Atomen, ist.

4. Verfahren nach einem der vorangehenden Ansprüche, bei dem Verfahrensschritt (B) in einer Atmosphäre durchgeführt wird mit weniger als 2,5 Vol.% Sauerstoff.

5. Verfahren nach einem der vorangehenden Ansprüche, welches kontinuierlich durchgeführt wird.

6. Verfahren nach einem der vorangehenden Ansprüche, bei dem im Verfahrensschritt (A) die Zumischung der Organosiliziumverbindungen als feinverteiltes Aerosol erfolgt.

7. Verfahren nach einem der vorangehenden Ansprüche, bei dem die Vermischung mit den Organosiliziumverbindungen im Verfahrensschritt (A) und die Reaktion im Verfahrensschritt (B) unter mechanischer oder gasgetragener Fluidisierung erfolgt.

8. Verfahren nach einem der vorangehenden Ansprüche, bei dem auf 100 Gewichtsteile an im Verfahrensschritt (A) eingesetztem Feststoff F1 im Verfahrensschritt (D) 1 bis 50 Gewichtsteile an Feststoff F1 eindosiert werden.

9. Verfahren nach einem der vorangehenden Ansprüche, bei dem die Feststoffe F1 ausgewählt werden aus Metalloxiden, Silikaten, Aluminaten, Titanaten und Aluminiumschichtsilikaten.

10. Verfahren nach Anspruch 9, bei dem die Feststoffe F1 ausgewählt werden aus gefällten Kieselsäuren und pyrogen hergestellten Kieselsäuren.

## Claims

1. Process for producing surface modified particulate finely divided solid F of large surface area, which process comprises
a process step (A) of mixing a partial amount of unmodified finely divided solid F1 with organosilicon compound to produce an offgas comprising organosilicon compound,
a process step (B) of reacting the mixture of unmodified finely divided solid F1 with organosilicon compound to produce surface modified finely divided solid F with or without an offgas comprising organosilicon compound,
a process step (C) of freeing the surface modified finely divided solid F of adsorbed byproducts and unconverted organosilicon compound which are obtained as offgas,
a process step (D) of metering a further partial amount of unmodified finely divided solid F1 into the offgas obtained in process steps (A),(C) and, if applicable, (B) to mix the solid F1 with organosilicon compound in the offgas,
and a process step (E) of the mixture obtained in process step (D) being fed in process step (A) to the partial amount of unmodified finely divided solid F1 and organosilicon compound.

2. Process according to Claim 1 wherein the organosilicon compounds are organosilanes of general formula (I)
X_{1+x'}-SiR⁴_{2-x'}-(CH₂)ᵥ-Y (I),
where
X represents halogen, nitrogen, OR³ or OCO_{R}³,
R³ represents C-O bonded C₁-C₁₅ hydrocarbyl or acetyl,
R⁴ represents a hydrogen atom or optionally NC-, OCN-, 2R²N-, HOOC-, R²OOC-, halogen-, acryloyl-, epoxy-, HS-, HO- or 2R²NOC-substituted Si-C bonded C₁-C₂₀ hydrocarbyl or C₁-C₁₅ hydrocarbyloxy, preferably, in each of which one or more mutually nonadjacent methylene units may be replaced by
-O-, -CO-, -COO-, -OCO-, or -OCOO-, -S-, or -NR²-groups and in which one or more mutually nonadjacent methine units may be replaced by -N= or -P= groups,
Y represents hydrogen, unsaturated or mono- or polyunsaturated C₁-C₂₀ hydrocarbyl, -OC(O)C(R)=CH₂, -vinyl,
-hydroxyl, -halogen, phosphonato, -NCO, -NH-C(O)-OR¹,
-glycidoxy, -SH, acid anhydrides, such as succinic anhydride,
**R, R¹** each represent C₁-C₁₅ hydrocarbyl,
**v** represents integral values from 0 to 10, and
**x'** represents 1 or 2.

3. Process according to either preceding claim wherein the organosilicon compounds are organosiloxanes constructed of A units of general formula (IIa) and B units of formulae (IIb - d)
(R⁵₃SiO_{1/2}) (IIa),
(R⁵₂SiO_{2/2}) (IIb),
(R⁵SiO_{3/2}) (IIc),
(SiO_{4/2}) (IId),
where the organosiloxanes may contain 1 or 2 -X groups attached to silicon atoms, where X is as defined above, and the organosiloxanes may contain the ≡SiX or =SiX₂ groups in a number C and A, B and C are subject to the following condition: 1 ≤ B ≤ 5000, with the proviso that B ≥ A+C, where A+B=0 is subject to the condition 10 ≤ B ≤ 100, while the ratio of A to C is freely choosable, and
**R⁵** represents an optionally mono- or polyunsaturated, monovalent, optionally halogenated Si-C bonded hydrocarbyl of 1 to 18 carbon atoms.

4. Process according to any preceding claim wherein process step (B) is conducted in an atmosphere containing less than 2.5% by volume of oxygen.

5. Process according to any preceding claim in a continuous operation.

6. Process according to any preceding claim wherein the organosilicon compounds are admixed in process step (A) as a finely divided aerosol.

7. Process according to any preceding claim wherein the mixing with the organosilicon compounds in process step (A) and the reacting in process step (B) are effected under mechanical or gasborne fluidization.

8. Process according to any preceding claim wherein from 1 to 50 parts by weight of solid F1 are metered into the offgas in process step (D) per 100 parts by weight of solid F1 used in process step (A) .

9. Process according to any preceding claim wherein the solids F1 are selected from metal oxides, silicates, aluminates, titanates and aluminum sheet-silicates.

10. Process according to Claim 9 wherein the solids F1 are selected from precipitated silicas and pyrogenically produced silicas.

## Revendications

1. Procédé de fabrication d'une matière solide F finement divisée, particulaire et modifiée en surface, ayant une aire élevée, dans lequel, dans une étape (A) du procédé, on mélange une quantité partielle de la matière solide finement divisée et non modifiée F1 avec un composé organique du silicium, avec formation d'un effluent gazeux contenant un composé organique du silicium,
dans une étape (B) du procédé, on fait réagir le mélange de la matière solide finement divisée et non modifiée F1 avec un composé organique du silicium, avec formation d'une matière solide F finement divisée et modifiée en surface et éventuellement un effluent gazeux contenant un composé organique du silicium,
dans une étape (C) du procédé, on libère la matière solide finement divisée et modifiée en surface F des sous-produits adsorbés et du composé organique du silicium n'ayant pas réagi, qui sont obtenus sous forme d'un effluent gazeux,
dans une étape (D) du procédé, on injecte une quantité partielle supplémentaire de matière solide finement divisée et non modifiée F1 dans l'effluent gazeux obtenu dans les étapes (A), (C) et éventuellement (B) du procédé, ce à l'occasion de quoi la matière solide F1 est mélangée au composé organique du silicium contenu dans l'effluent gazeux,
et, dans une étape (E) du procédé, on amène le mélange obtenu dans l'étape (D) du procédé, dans l'étape (A) du procédé, à la quantité partielle de la matière solide finement divisée et non modifiée F1 et du composé organique du silicium.

2. Procédé selon la revendication 1, **caractérisé en ce que** les composés organiques du silicium sont des organosilanes de formule générale (I)
X_{1+x'}-SiR⁴_{2-x'}-(CH₂)ᵥ-Y (I),
dans laquelle
X est un halogène, un radical azoté, OR³ ou OCOR³,
R³ est un radical hydrocarboné en C₁-C₁₅ lié à C-O, ou un groupe acétyle,
R⁴ est un atome d'hydrogène, ou un radical hydrocarboné en C₁-C₂₀ ou un radical hydrocarbyloxy en C₁-C₁₅, lié à Si-C, éventuellement substitué par un ou plusieurs substituants -CN, -NCO, -NR²₂, -COOH, -COOR², -halogéno, -acryle, -époxy, -SH, -OH ou -CONR²₂, de préférence dans chacun desquels une ou plusieurs unités méthylène non voisines les unes des autres peuvent être remplacées par des groupes -O-, -CO-, -COO-, -OCO-, ou, -OCOO-, -S- ou -NR²-, et dans lesquels une ou plusieurs unités méthine non voisines les unes des autres peuvent être remplacées par des groupes -N= ou -P=,
Y est un atome d'hydrogène, un radical hydrocarboné en C₁-C₂₀ insaturé, ou mono ou polyinsaturé, -OC(O)C(R)=CH₂, un groupe vinyle, hydroxyle, halogéno, phosphonato, -NCO, -NH-C(O)-OR¹, glycidoxy, -SH,
anhydride d'acide, tel que l'anhydride succinique, R, R¹ sont des radicaux hydrocarbonés en C₁-C₁₅,
v est un nombre entier de 0 à 10, et
x' vaut 1 ou 2.

3. Procédé selon l'une des revendications précédentes, dans lequel les composés organiques du silicium sont des organosiloxanes constitués de A unités de formule générale (IIa) et de B unités ayant les formules (IIb-d)
(R⁵₃SiO_{1/2}) (IIa),
(R⁵₂SiO_{2/2}) (IIb), (R⁵SiO_{3/2}) (IIc), (SiO_{4/2}) (IId),
où les organosiloxanes peuvent, sur les atomes de Si, contenir 1 ou 2 groupes -X, X ayant les significations données ci-dessus, et les organosiloxanes peuvent comprendre les groupes ≡SiX ou =SiX₂ en un nombre C, et, pour A, B et C, on a 1 ≤ B ≤ 5000, à la condition que B ≥ A+C ; si A+B=0, on a 10 ≤ B ≤ 100, le rapport de A à C pouvant être quelconque, et
R⁵ est un radical hydrocarboné ayant 1 à 18 atomes de carbone, lié à Si-C, éventuellement halogéné, monovalent, éventuellement mono- ou polyinsaturé.

4. Procédé selon l'une des revendications précédentes, dans lequel l'étape (B) du procédé est mise en oeuvre dans une atmosphère contenant moins de 2,5 % en volume d'oxygène.

5. Procédé selon l'une des revendications précédentes, qui est mis en oeuvre en continu.

6. Procédé selon l'une des revendications précédentes, dans lequel, dans l'étape (A) du procédé, le mélange des composés organiques du silicium est réalisé sous forme d'un aérosol finement divisé.

7. Procédé selon l'une des revendications précédentes, dans lequel le mélange avec les composés organiques du silicium dans l'étape (A) du procédé et la réaction dans l'étape (B) du procédé sont mis en oeuvre en présence d'une fluidisation mécanique, ou supportée par un gaz.

8. Procédé selon l'une des revendications précédentes, dans lequel, pour 100 parties en poids de la matière solide F1 utilisée dans l'étape (A) du procédé, on injecte dans l'étape (D) du procédé 1 à 50 parties en poids de la matière solide F1.

9. Procédé selon l'une des revendications précédentes, dans lequel les matières solides F1 sont choisies parmi les oxydes métalliques, les silicates, les aluminates, les titanates et les phyllosilicates d'aluminium.

10. Procédé selon la revendication 9, dans lequel les matières solides F1 sont choisies parmi les silices précipitées et les silices fabriquées par voie pyrogène.
